Europäisches Patentamt

European Patent Office

Office européen des brevets

(19)

(11) Veröffentlichungsnummer: **0 177 729**
**B1**

(12) **EUROPÄISCHE PATENTSCHRIFT**

(45) Veröffentlichungstag der Patentschrift: **31.10.90**

(51) Int. Cl.⁵: **H 01 S 3/032**, H 01 S 3/097

(21) Anmeldenummer: **85110690.6**

(22) Anmeldetag: **26.08.85**

(54) Edelgasionenlaser, Verfahren zu seinem Betrieb und seine Verwendung.

(30) Priorität: **26.09.84 DE 3435311**

(43) Veröffentlichungstag der Anmeldung:
**16.04.86 Patentblatt 86/16**

(45) Bekanntmachung des Hinweises auf die
Patenterteilung:
**31.10.90 Patentblatt 90/44**

(84) Benannte Vertragsstaaten:
**CH DE FR GB IT LI NL SE**

(56) Entgegenhaltungen:
**US-A-3 646 476**
**US-A-3 889 207**
**US-A-3 961 283**

**APPLIED PHYSICS, Band 14, Nr. 3, November
1977, Seiten 277-282, Springer Verlag, New
York, US; D. SCHUÖCKER et al.: "Properties and
current-voltage characteristics of discharges in
waveguide gas lasers"**

(73) Patentinhaber: **Siemens Aktiengesellschaft
Wittelsbacherplatz 2
D-8000 München 2 (DE)**

(72) Erfinder: **Seelig, Wolfgang, Prof. Dr.
Hügelstrasse 43
D-6100 Darmstadt (DE)**

EP 0 177 729 B1

## Beschreibung

Die Erfindung bezieht sich auf eine Laser anordnung gemäß dem Oberbegriff des Anspruchs 1. Eine solche Edelgasionenlaseranordnung wird beispielsweise in US—A—36 46 476 beschrieben.

US—A—3 889 207 beschreibt einen Gaslaser mit einem Kapillardurchmesser von etwa 1 mm. US—A—3 961 283 beschreibt einen Wellenleiter-Gaslaser, wobei für $CO_2$-Gas ein Kapillardurchmesser von 1 mm angegeben ist.

Seit Jahren wird der Bedarf an kohärenten Lichtquellen, die im Sichtbaren einen kontinuierlichen Strahl mit einer Leistung zwischen 0,5 mW und 5 mW abgeben sollen, durch Helium-Neon-Laser gedeckt.

Dieser Lasertyp ist inzwischen zu einem technisch ausgereiften, langzeitstabilen Bauelement entwickelt worden, das sich ohne weiteres auch in modernste optische System, beispielsweise Bildplattenspieler, integrieren läßt. Unbefriedigend ist dabei allerdings der Umstand, daß HeNe-Laser nach wie vor viel Platz beanspruchen. So hat die derzeit kleinste Röhre, der von der Firma Spectra-Physics unter der Bezeichnung "007" angebotene 0,5 mW-Laser, noch immer eine Länge von 11,5 cm und einen Durchmesser von etwa 2,5 cm, und aus physikalischen Gründen sind hier weitere Fortschritte kaum noch möglich.

Man hat deshalb schon relativ früh nach Alternativen gesucht. Besonders attraktiv mußte dabei der Argonlaser erscheinen: Er liefert Verstärkungswerte pro Längeneinheit, die um eine Größenordnung größer sind als beim HeNe-Laser. Darüber hinaus hatten Rechnungen auf der Basis von Bilanzgleichungen, mit denen sich die Laserverstärkungsmechanismen und die Gasentladungsvorgänge näherungsweise beschreiben lassen, zu Ähnlichkeitsgesetzen geführt, die auch bei sehr engen, kurzen Entladungsrohren ein Anschwingen zumindest nicht ausschlossen (Z. Physik *215* (1968) 437 und *219* (1969) 5). Diese Skalierungsregeln wurden allerdings, soweit ersichtlich, für Rohrdurchmesser <1 mm nicht verifiziert; man konzentrierte sich vielmehr ausschließlich auf größere Entladungsvolumina, zur Erzeugung mittlerer bis hoher Ausgangsleistungen. Möglicherweise wurden Mini-Argonlaser deshalb nicht in Betracht gezogen, weil man technologische Probleme sah oder zu hohe Magnetfelder für erforderlich hielt (vgl. hierzu App. Phys. *4* (1974) 141, insbes. GL. (7)).

In US—A—3 646 476 ist angegeben, daß Gaslaser mit Kapillaren, deren Innendurchmesser unter 2 mm liegt, instabil werden.

Der Erfindung liegt daher die Aufgabe zugrunde, einen Edelgasionenlaser anzugeben, der Licht auch mit Wellenlängen <0,7 µm erzeugen kann, ein geringes Bauvolumen benötigt und eine hohe Lebensdauer verspricht. Diese Aufgabe wird erfindungsgemäß durch einen Gaslaser mit den Merkmalen eines der unabhängigen Patentansprüche 1 oder 2 gelöst.

Die Erfindung basiert auf der Erkenntnis, daß—unter geeignet gewählten Betriebsparametern—auch bei kleinsten Kapillardurchmessern und äußerst geringen Entladungslangen eine stationäre Laseraktivität zustande kommt. So wurde beispielsweise ein Argonlaser realisiert, der mit einer Entladungsstrecke von 1 cm, einer Spiegeldistanz von 3 cm, einem Entladungsquerschnitt von 0,1 mm und einer Leistungsaufnahme von 25 W eine 1 mW starke 0,488 µm-Linie liefert. Die Konstruktion wird dabei nicht übermäßig belastet und kommt bemerkenswerterweise ohne Magnetfeld aus.

Der Bereich der möglichen Betriebsparameter wird im wesentlichen durch folgende Randbedingungen festgelegt:

1. Im Füllgas sollte eine wandstabilisierte, durch Elektron-Atom-Stöße geprägte Niederdruckbogenentladung brennen. In diesem Fall wird die Besetzungsinversion maximal, wenn die Produkte aus dem Fülldruck p und dem Entladungskanal-(Kapillaren-)radius R sowie aus der in der Entladung herrschenden Längsfeldstärke $E_z$ und dem Kapillarenradius bestimmte, von der Stromdichte unabhängige Werte haben, wenn also gilt

$$pR=k_1 \tag{1}$$

$$E_zR=k_2 \tag{2}$$

2. Die Laserverstärkung sättigt sich, wenn die Laserniveaus durch Elektronenstöße mit einer Rate entleert werden, die gegenüber der Strahlungszerfallrate nicht mehr klein ist. Um diesen Sättigungseffekt zu vermeiden, darf die Elektronendichte $n_e$ einen bestimmten Grenzwert nicht übersteigen (Z. Physik *264* (1973) 61, Abschn. 2). Das bedeutet, daß die Entladungsstromdichte j unter einem Grenzwert $j_{gr}$ bleiben muß:

$$j \leq j_{gr} \tag{3}$$

3. Zu einer Sättigung der Laserverstärkung kommt es auch dann, wenn die Abwanderungsrate der Laserionen zur Rohrwand die Größenordnung der Strahlungszerfallrate erreicht. Dieser Sättigungseffekt tritt nicht auf, wenn der Kapillarenradius R über einem, Grenzwert $R_{gr}$ bleibt, also

$$R \geq R_{gr} \tag{4}$$

ist.

2

4. Das Licht erleidet durch Beugungs- bzw. Dämpfungseffekte und durch Reflexion an den Spiegeln Verluste, die möglichst klein gehalten werden sollen. Arbeitet der Laser mit Moden ("Resonanzmoden"), bei denen sich das Licht zwischen den Spiegeln im freien Raum ausbreitet, so dominieren Beugungsverluste. Sie sind am geringsten, wenn das Licht in einer konfokalen Resonatorkonfiguration in $TEM_{oo}$-Mode schwingt, und in diesem Fall noch tolerierbar, wenn die Fresnel-Zahl F

$$F=R^2/\lambda b \geq 0,5 \tag{5}$$

ist (Bell. Syst. Techn. J. *40* ((1961) 453, insbesondere Fig. 15, $\lambda$=Laser-Wellenlänge, b=Spiegelabstand). Geht man zu kleineren F-Werten über, so ist ein Wellenleiterbetrieb vorzuziehen, bei dem das Licht durch Reflexionen an der Rohrwand geführt wird. Hier ergeben sich vor allem Transmissionsverluste im Wellenleiter, die von der Laserwellenlänge, dem Rohrdurchmesser, der Modenart und dem Brechungsindex das Wandmaterials abhängen. Für den Grundmode $EH_{11}$ und ein Rohr mit einer optischen Dichte n ergibt sich gemäß Bell. Syst. Techn. J. *43* (1964) 1783 der Verlust v pro Längeneinheit zu

$$v=\frac{n^2+1}{\sqrt{n^2-1}} \cdot \frac{\lambda^2}{R^3}[\% \text{ pro cm}] \tag{6}$$

5. Die Entladung muß in einem Körper stattfinden, der durch die Verlustwärme nicht zu stark belastet wird.

Die Verlustleistung, die mehr als 99% der eingespeisten Leistung P beträgt, ist so zu begrenzen, daß die Temperatur an der Rohrinnenwand einen kristischen, weit unterhalb der Schmelztemperatur liegenden Wert nicht übersteigt und daß die thermisch bedingten Spannungen—besonders kritisch sind die Längenausdehnungsunterschiede zwischen Rohrinnen- und Rohraußenseite—nicht zum Bruch führen. Für zylindersymmetrische Entladungsröhren mit der Länge $L_e$ und der eingespeisten Leistung $P=U \cdot i$ gilt im stationären Betrieb für die Temperatur an der Rohrinnenwand ($T_i$)

$$T_i-T_a=\Delta T=\frac{P}{2\pi L_e \Lambda} \ \ln \frac{R_a}{R}[K] \tag{7}$$

$T_a$=Temperatur an der Rohraußenwand
$\Lambda$=Wärmeleitungskoeffizient [Ws/cm K]
$R_a$=Rohraußenradius [cm].
$T_a$ wird durch Kühlung auf einem bestimmten Wert gehalten, und $T_i$ sollte nicht mehr als 200°K darüber liegen. Damit das Rohr nicht bricht, sollte seine Länge unter einer Grenzlänge $L_{gr}$ bleiben, für die gilt

$$L_{gr}=\frac{2}{\eta}\sqrt{\frac{2\sigma_B}{E} \frac{R_a}{\Delta T}}[cm] \tag{8}$$

$\eta$=Wärmeausdehnungskoeffizient $[K^{-1}]$
$\sigma_B$=Bruchspannung $[N/cm^2]$
E=Elastizitätsmodul $[N/cm^2]$.
Eliminiert man aus Gleichung (7) und (8) $\Delta T$ und setzt $L_{gr}=L_e$, dann gewinnt man die Beziehung

$$P=2\pi K\Lambda R_a/\ln\frac{R_a}{R}[W] \tag{9}$$

mit $K=2\sqrt{2\sigma_B/E}$.

Für einen typischen Anwendungsfall, den ArII-Laser mit der 0,488 µm-Linie und einem zylindersymmetrischen Berilliumoxidrohr, ergeben die aufgezählten Bemessungsregeln folgende Zahlenwerte:
—Der geforderte Gasentladungstyp stellt sich ein, wenn

$$jR\leq50 \text{ [A/cm]} \tag{10}$$

j=Entladungsstromdichte

ist. In diesem Bereich haben die differentielle Verstärkung $g_o$ und die Ausgangsleistung $\Phi$ maximale Werte, wenn

# EP 0 177 729 B1

$$pR = 3{,}3 \; [Pa \cdot cm] \qquad (11)$$

und

$$E_z R = 0{,}65 \; [V] \qquad (12)$$

sind. Aus (10) und (12) läßt sich die längennormierte Leistung P/L ausrechnen:

$$P/L = iU/L = j\pi R^2 E_z \leq 100 \; W/cm \qquad (13)$$

$$i = \text{Entladungsstromstärke.}$$
$$L = \text{Entladungslänge.}$$

Unter diesen Vorraussetzungen gilt

$$g_o = 10^{-8} \; i^2/R^4 \; [cm^{-1}] \qquad (14)$$

$$\Phi = 4 \times 10^{-7} \; i^2 L/R^2 \; [W] \qquad (15)$$

$$= 6 \times 10^{-7} \; P^2/L \; [W]$$

und wegen (10)

$$\Phi/L \leq 6 \times 10^{-3} \; [W/cm] \qquad (16)$$

—Die Elektronenstoßentleerung der Laserniveaus spielt für Entladungsstromdichten und Entladungsstromstärken bis zu den Grenzwerten

$$j_{gr} = 2500 \; [A/cm^2] \qquad (17)$$

$$i_{gr} \cong 7500 \; R^2 \; [A] \qquad (18)$$

keine Rolle. Aus dieser Strombegrenzung folgen als Grenzwerte für die Größen $g_o$, P und $\phi/L$

$$g_0 \cong 0{,}15 \; [cm^{-1}] \qquad (19)$$

$$P \cong 5 \times 10^3 RL \; [W] \qquad (20)$$

$$\Phi/L \cong 15R^2 \; [W/cm] \qquad (21)$$

Summiert man die Ausgangsleistung über alle Linien, so gilt

$$\Phi_\Sigma \cong 2\Phi_{4880} = 30R^2 L \; [W] \qquad (22)$$

—Die Abwanderungsverluste der Laserionen zur Rohrwand sind vernachlässigbar, wenn der Rohrradius größer ist als

$$R_{gr} = 3 \times 10^{-3} \; [cm] \qquad (23)$$

—Arbeitet der Laser mit einer konfokalen Spiegelanordnung und einem TEM$_{oo}$-Mode, so liefert Gleichung (5)

$$R^2/b \geq 2 \times 10^{-5} \; [cm] \qquad (24)$$

In der Praxis kann der Spiegelabstand noch größer sein. Bei sehr dünnen Querschnitten ($R < 2 \times 10^{-2}$ cm) dürfen die Spiegel sogar um das 2- bis 3-Fache das b-Wertes aus der Fresnel-Zahl F auseinanderliegen. Im Wellenleiterbetrieb resultiert aus Gleichung (6), daß die Verluste im Vergleich zu den Verstärkungswerten vernachlässigt werden können, wenn

$$R \geq 5 \times 10^{-3} \; cm \qquad (25)$$

ist.

—Für das Rohr liefern die Gleichungen (7), (8) und (9) mit den Materialkonstanten für BeO und der Annahme $\Delta T = 100$ K

$$R_a/R \leq 90 \qquad (26)$$

4

# EP 0 177 729 B1

und

$$L_e/R \leq 6300 \text{ mit}$$

$2Ra$=kleinste Querabmessung des Körpers (27)
$L_e$=Länge des Rohres.

Man erkennt, daß mit Verilliumoxid die physikalisch vorgegebene Geometriegrenzen ohne weiteres realisiert werden können.

Der vorgeschlagene Miniaturlaser gestattet mit seiner kurzen Baulänge einen Ein-Frequenz-Betrieb. Er eignet sich daher insbesondere zur Erzeugung frequenzstabiler Signale oder zur Abgabe von amplituden- und/oder frequenzmoduliertem Licht.

Weitere vorteilhafte Ausgestaltungen und Weiterbildungen sind Gegenstand zusätzlicher Ansprüche.

Der Lösungsvorschlag soll nun anhand zweier bevorzugter Ausführungsbeispiele in Verbindung mit der beigefügten Zeichnung näher erläutert werden. In den Figuren sind einander entsprechende Teile mit gleichen Bezugszeichen versehen. Es zeigen:

Fig. 1 einen Argonlaser, in einem Längsschnitt,
Fig. 2 den Laser der Fig. 1 im Schnitt II—II,
Fig. 3 in einem Längsschnitt einen weiteren Argonlaser,
Fig. 4 die Größe P/L als Funktion von R,
Fig. 5 die Größe $\Phi$/L als Funktion von R,
Fig. 6 die Größe i als Funktion von R,
Fig. 7 die Größe p und $E_z$ in Abhängigkeit von R,
Fig. 8 die Grenzlänge eines BeO-Entladungsrohrs, als Funktion von R und
Fig. 9 $\Phi$, aufgetragen gegen R, für eine $TEM_{oo}$-Qelle in einen konfokalen Resonator.

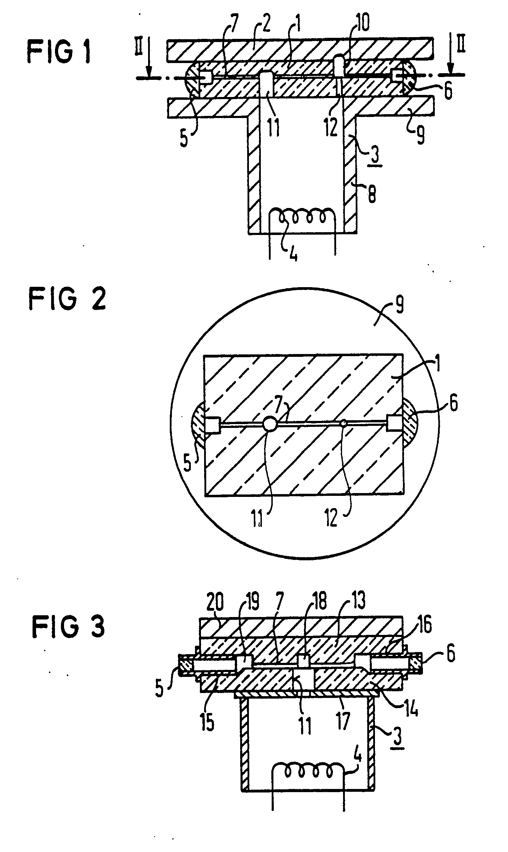

Der Gaslaser der Fig. 1 enthält im einzelnen einen massiven Körper 1, eine Anode 2, einen Kathodentopf 3 mit einer Kathode 4 sowie zwei Resonatorspiegel 5, 6.

Der Körper 1 hat die Form einer Platte, die eine Grundfläche von $30 \times 20$ mm$^2$ besitzt, 5 mm dick ist und aus Berilliumoxid besteht. Diese Platte ist mit einer 0,1 mm starken Mittenbohrung ("Entladungskanal") 7 versehen, die die Platte 1 konzentrisch zu deren längskantenparallelen Mittelachse durchsetzt. Der Entladungskanal ist an seinen beiden Enden etwas erweitert und wird dort jeweils durch einen der beiden Spiegel 5, 6 abgeschlossen. Als Spiegel fungieren im vorliegenden Fall Linsen mit einer verspiegelten konvexen Außenseite und einer entspiegelten planen Innenseite.

Die Anode 2 besteht aus einem Kupferblech mit einem Durchmesser von 40 mm und einer Dicke von 4 mm. Dieses Blech bedeckt eine der beiden Grundflächen der Platten. Die anderen Plattengrundfläche wird durch den Kathodentopf 3 abgedeckt. Wie der Fig. zu entnehmen, hat der Topf die Form eines einseitig offenen Hohlzylinders 8, der an seinem offenen Ende mit einem nach außen weisenden Flansch 9 versehen ist. Der Flansch, der die Platte 1 kontaktiert, hat etwa die gleichen Außenabmessungen wie die Anode 2. Im Inneren des Hohlzylinders befindet sich die Kathode 4, die im vorliegenden Beispiel eine kommerzielle Leuchtröhrenkathode ist.

Die Platte 1 enthält außer der Bohrung 7 drei Ausnehmungen, die den Entladungskanal entweder mit der Anode (Ausnehmung 10) oder mit dem Kathodenraum (Ausnehmungen 11 und 12) verbinden. Die Ausnehmungen 10 und 11—sie definieren die Länger der Entladungsstrecke—sind etwa 1 cm voneinander entfernt, und die Ausnehmung 12—sie ist relativ eng und dient zum Druckausgleich—befindet sich im Bereich der Anodenausnehmung 10. Um Entladungswege durch die Ausnehmung 12 zu verhindern, könnte man diese Öffnung auch noch näher an den Spiegel 6 heranrücken und über einen im Flansch 9 verlaufenden Verbindungskanal in den Kathodenraum einmünden lassen. Es läßt sich zeigen, daß bei einem Mini-Argonlaser ($R < 4 \times 10^{-2}$ cm) mit m Ausgleichsleitungen axiale Druckgradienten verhindert werden können, wenn gilt

$$\frac{mR_1{}^3}{L_1} > 10^{-3}iR \tag{28}$$

($R_1$, $L_1$=Radius bzw. Länge jeder Ausgleichsleitung in cm); bei dieser Dimensionierungsvorschrift sind die Leitungen zugleich auch durchbruchsfest.

Der Innenraum des Lasers enthält Argon mit einem Druck von 5 Torr. Im Betrieb wird auf der Entladungsstrecke der Bohrung 7 mit einem Ladungsstrom von 200 mA und einer Entladungsspannung von 130 V eine Niederdruckbogenentladung unterhalten. Der Verstärkungsfaktor $g_o$ liegt bei etwa 0,15 cm$^{-1}$, und die Ausgangsleistung $\phi$ beträgt ungefähr 1 mW.

Das Ausführungsbeispiel der Fig. 3 ist folgendermaßen aufgebaut:

Die Berylliumoxidplatte besteht aus zwei Hälften 13, 14, die durch einen Schnitt in der grundflächenparallelen Mittenebene der Platte entstanden sind. Die Figur läßt erkennen, daß der Entladungskanal 7 in die Bodenfläche der oberen Hälfte 13 eingebracht ist. Dieser Kanal hat ebenfalls erweiterte Enden, in die jeweils ein Spiegelträger 15, 16 eingeschoben ist. Jeder Träger besteht aus einem Metallröhrchen mit angeformten Anschlagsteg, das einen der Spiegel 5, 6 aufnimmt und zugleich als Entladungsanode dient.

EP 0 177 729 B1

Der Kathodentopf 3 ist als ein bodenseitig vollständig und plattenseitig mit einer Lochscheibe 17 abgeschlossener Hohlzylinder gestaltet. Der Kathodenraum kommuniziert über die Öffnung der Lochscheibe 17 und eine zentrale Plattenausnehmung 11 mit dem Entladungskanal. Um eine Gasrückführung zu ermöglichen, enthält die obere Plattenhälfte 13 noch zwei weitere Kanäle, einen Querkanal 18 und eine Ringnut 19. Der Querkanal verläuft senkrecht zum Entlandungskanal 7 und schneidet ihn im Bereich der zentralen Ausnehmung 11; die Ringnut verbindet die beiden erweiterten Enden des Entladungskanals mit den Enden des Querkanals. Zur besseren Wärmeabfuhr trägt die obere Plattenhälfte noch einen—in der Figur schematisch als Block 20 angedeuteten—Kühlkörper. Im übrigen sind die geometrischen Abmessungen und Betriebsparameter ähnlich wie im ersten Ausführungsbeispiel.

Die Laservariante der Fig. 3 hat spezifische Vorzüge:

Alle Plattenausnehmungen lassen sich relativ einfach realisieren; insbesondere braucht man die Kapillare nicht zu bohren. Sämtlich Teile können in einer herkömmlichen Metall-Keramik-(Glas)-Technik vakuumdicht miteinander verlötet werden. Überdies gestattet die Röhre hohe Ausheiztemperaturen.

In den folgenden Figuren sind noch einmal—für die 0,488 µm-Linie des ArII—die optimalen bzw. kristischen Betriebs- und Bemessungswerte in Abhängigkeit vom Radius der Entladungssäule dargestellt. Mit Hilfe dieses Kurvenwerkes kann man zu einem vorgegebenen Entladungsquerschnitt mühelos geeignete Parameter und die zugehörige Ausgangsleistung ermitteln.

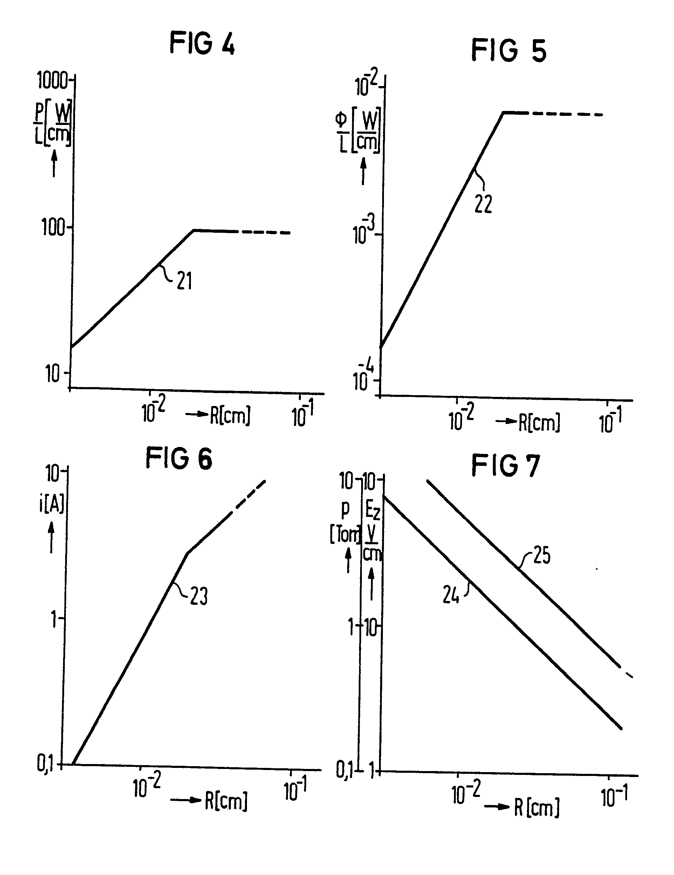

Die Figuren 4, 5 und 6 zeigen die maximalen Werte für die Größe P/L, $\Phi$/L bzw. i(Kurven 21, 22 bzw. 23). Alle Kurven sind für R-Werte$\leq 2 \times 10^{-2}$ cm durch die Grenzstromdichte $j_{gr}$ und für größere Radien durch die Forderung jR$\leq$50 A/cm bestimmt.

Fig. 7 stellt die Gleichungen (11) und (12) in den Kurven 24 bzw. 25 dar.

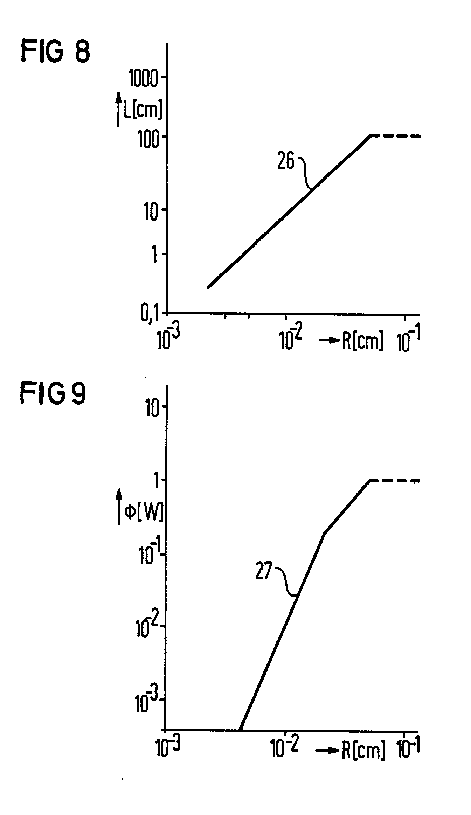

In Fig. 8 ist die kritische Länge eines BeO-Körpers eingetragen, und zwar für einen TEM$_{oo}$-Mode in einer konfokalen Spiegelanordnung (Kurve 26). Die Kurve zeigt, daß die maximale Körperlänge im erfindungsgemäß vorgeschriebenen Innenquerschnittsbereich allein durch Beugungsverluste bestimmt wird. Erst bei einem Innendurchmesser von etwa 1 mm würde der Anstieg der Geraden 26 durch die mechanisch bestimmte Grenzlänge abgeschnitten. An dieser Stelle sei noch einmal darauf hingewiesen, daß bei sehr kleinen Radien (R<$2 \times 10^{-2}$ cm) für die verwendete Fresnel-Zahl F (F=R$^2$/$\lambda$b) ein Spiegelabstand (b) zwischen 2 L und 3 L möglich ist.

Die in Fig. 9 dargestellte Ausgangsleistung $\Phi$ (Kurve 27) wird im ersten Abschnitt durch Sättigungseffekte (Gleichungen (15) und (20) und im zweiten, bei R=$2 \times 10^{-2}$ cm beginnenden Abschnitt durch Beugungsverluste (Gleichungen (16) und (24)) begrenzt.

Die Erfindungs beschränkt sich nicht nur auf die dargestellten Ausführungsbeispiele. So kann man auch andere Laserübergänge des ionisierten Argons oder anderer ionisierter Edelgase verwenden, etwa die bei 0,3638 µm oder 0,3511 µm liegenden Linien des ArIII oder die 0,3507 µm-Linie des KrII. Soweit dabei die Bedingungen neu ermittelt werden müssen, ist dies zumindest für die wichtigsten Laserübergänge ohne sonderlichen Aufwand möglich. Unabhängig davon könnte man den Laser statt im Dauerstrich- auch im Pulsbetrieb arbeiten lassen und im Einzelfall auch als Verstärker verwenden. Im übrigen bleibt es dam Fachmann unbenommen, die Laserröhre auch konstruktiv noch zu verändern. Beispielsweise könnte der Entladungskanal einen eckigen Querschnitt erhalten, wobei R den größten Abstand von der Symmetrieachse bezeichnet, und/oder in einem Mischmode, bei dem das Entladungsrohr als Wellenleiter fungiert und einen bestimmten Abstand zu den Spiegeln einhält, betrieben werden; denkbar ist auch die Verwendung anderer Kanalplattenmaterialien wie Aluminiumoxid, Bornitrid, eloxiertes Aluminium oder bestimmte Kristalle.

## Patentansprüche

1. Edelgasionenlaseranordnung, enthaltend einen Körper (1) mit einem langgestreckten, gasgefüllten und insbesondere zylindrischen Entladungskanal (7), zwei Elektroden (2, 3), mit denen im Entladungskanal (7) eine Gasentladung erzeugt werden kann, zwei einen optischen Resonator bildende Spiegel (5, 6), die den Entladungskanal (7) zwischen sich einschließen, und eine Ansteuerschaltung, gekennzeichnet durch die folgenden Dimensionierungen im Bereich der Entladungsstrecke:

—größter Entladungskanalradius

$$R: 2 \times 10^{-2} < R \leq 4 \times 10^{-2} \text{ [cm]}$$

—Stromdichte j mit im Entladungsrohr:

$$jR \leq 50 \text{ [A/cm]}$$

—Längsfeldstärke $E_z$:

$$0,5/R \leq E_z \leq 0,8/R \text{ [V/cm].}$$

2. Edelgasionenlaseranordnung, enthaltend einen Körper (1) mit einem langgestreckten, gasgefüllten und insbesondere zylindrischen Entladungskanal (7), zwei Elektroden (2, 3), mit denen im Entladungskanal

6

(7) eine Gasentladung erzeugt werden kann, zwei einen Resonator bildende Spiegel (5, 6), die einen Entladungskanal (7) zwischen sich einschließen, und eine Ansteuerschaltung, gekennzeichnet durch die folgenden Dimensionierungen im Bereich der Entladungsstrecke:

—größter Entladungskanalradius R:

$$3 \times 10^{-3} \leqq R \leqq 2 \times 10^{-2} \ [\text{cm}]$$

—Stromdichte j:

$$j \leqq 2500 \ [\text{A/cm}^2]$$

—Längsfeldstärke $E_z$:

$$0,5/R \leqq E_z \leqq 0,8/R \ [\text{V/cm}].$$

3. Laseranordnung nach Anspruch 1 oder 2, dadurch gekennzeichnet, daß
—der Körper als Platte ausgebildet ist,
—der Entladungskanal (71) beidseitig durch Spiegel (5, 6), die an gegenüberliegenden Stirnflächen der Platte (1) anliegen, abgeschlossen ist,
—die Platte (1) zwischen zwei an ihren Grundflächen anliegenden Metallteilen eingeschlossen ist, von denen das eine Teil (2) ebenfalls Plattenform hat und als Entladungsanode dient und das andere Teil (3) einen Hohlraum bildet, in dem sich die Entladungskathode (4) befindet,
—der Entladungskanal (7) über eine erste Plattenausnehmung (10) mit der Anode (2) und über zwei weitere Plattenausnehmungen (11, 12) mit dem Hohlraum des Kathodentopfs verbunden ist, wobei sich eine der kathodenseitigen Plattenausnehmungen (12) im Bereich der ersten Plattenausnehmung (10) befindet.

4. Laseranordnung nach Anspruch 1 oder 2, dadurch gekennzeichnet, daß
—der Körper als eine zweiteilige Platte (1) ausgebildet ist, die in einer zu ihren Grundflächen parallelen Ebene durchschnitten ist,
—der Entladungskanal (7) in das erste Plattenteil (13) eingebraucht ist, und zwar in dessen das andere Plattenteil (14) kontaktierende Fläche,
—der Entladungskanal (7) an seinen beiden Enden erweitert ist und jede dieser Erweiterungen einen Spiegelträger (15, 16) aufnimmt,
—jeder Spiegelträger (15, 16) aus einem Metallröhrchen besteht, jeweils einen der Spiegel (5, 6) haltert und als Entladungsanode dient,
—an einer der beiden Grundflächen der Platte (1) ein Metallteil (3) anliegt, das einen die Entladungskathode (4) aufnehmenden Hohlraum bildet,
—das erste Plattenteil (13) eine Ausnehmung (18, 19) enthält, die die erweiterten Entladungskanalenden mit der Mitte des Entladungskanals (7) verbindet,
—das zweite Plattenteil (14) eine Ausnehmung (11) enthält, die die Mitte des Entladungskanals (7) mit dem Hohlraum verbindet.

5. Laseranordnung nach einem der Ansprüche 1 bis 4, dadurch gekennzeichnet, daß das Füllgas Argon ist.

6. Laseranordnung nach einem der Ansprüche 1 bis 5, dadurch gekennzeichnet, daß gilt:
$1,3/R \leqq p \leqq 6,7/R \ [\text{Pa/cm}]$, insbesondere
$2,7 \ R \leqq p \leqq 4/R \ [\text{Pa/cm}]$ mit
$p \neq$ Fülldruck des Gases.

7. Laseranordnung nach einem der Ansprüche 1 bis 5, dadurch gekennzeichnet, daß der Körper (1) rohrförmig ist und aus Berylliumoxid besteht und daß gilt:
$L \leqq 6300R$ und
$R_a/R \leqq 45$ mit
$L \neq$ Länge des Körpers,
$2R_a \neq$ kleinste Außenquerabmessung des Körpers.

8. Laseranordnung nach einem der Ansprüche 1 bis 7, dadurch gekennzeichnet, daß eine konfokale Spiegelanordnung vorgesehen ist und daß der Abstand zwischen den Spiegeln (5, 6) 1,8 mal bis 3,2 mal größer ist als die Länge der Gasentladungsstrecke im Entladungskanal (7).

9. Laseranordnung nach einem der Ansprüche 1 bis 8, dadurch gekennzeichnet, daß gilt:

$$\frac{mR_1^3}{L_1} > 10^3 \ iR \ \text{mit}$$

$2R_1, L_1, m \neq$ größte Querabmessung bzw. Länge bzw. Anzahl der Druckausgleichsleitungen (12, 18, 19); $i \neq$ Entladungsstrom.

## EP 0 177 729 B1

10. Laseranordnung nach Anspruch 3, dadurch gekennzeichnet, daß die Spiegel Linsen (5, 6) mit einer verspiegelten gekrümmten Außenseite und einer entspiegelten planen Innenseite sind.

11. Laseranordnung nach Anspruch 3 oder 4, dadurch gekennzeichnet, daß die Ausnehmung im ersten Plattenteil (13) aus einem langgestreckten Querkanal (18) und einer Ringnut (19) gebildet wird, wobei der Querkanal (18) den Entladungskanal (7) in dessen Mitte schneidet und die Ringnut (19) die Entladungskanalenden mit den Enden des Querkanals verbindet.

12. Laseranordnung nach Anspruch 3 oder 4, dadurch gekennzeichnet, daß das Füllgas Argon ist und daß der Entladungskanal (7) einen Durchmesser von ca. 0,1 mm hat und ungefähr 3 cm lang ist, daß die Entladungsstrecke eine Länge von etwa 1 cm hat, daß die Platte (1) ca. 0,5 cm dick ist, daß Entladungsstrom und Entladungsspannung Werte von etwa 200 mA bzw. 130 V haben und daß der Fülldruck etwa 670 Pa beträgt.

13. Laseranordnung gemäß einem der Ansprüche 1 bis 12, dadurch gekennzeichnet, daß gilt:
$0,6/R \leqq E_z \leqq 0,7/R$ [V/cm] mit
$E_z \neq$ Längsfeldstärke in der Gasentladung.

14. Laseranordnung gemäß einem der Ansprüche 1 bis 13, dadurch gekennzeichnet, daß das zwischen den Spiegeln eingeschlossene Laserlicht in nur einem Resonatormode vorliegt und daß gilt:
$R^2/\lambda b \geqq 0,5$ für $2R \geqq 4 \times 10^{-2}$ cm und
$R^2/\lambda b \geqq 0,15$ für $2R < 4 \times 10^{-2}$ cm mit
$b \neq$ Spiegelabstand, $\lambda \neq$ Laserwellenlänge.

15. Laseranordnung gemäß einem der Ansprüche 1 bis 13, dadurch gekennzeichnet, daß das zwischen den Spiegeln eingeschlossene Laserlicht in einem Wellenleitermode vorliegt und daß gilt:
$\lambda^2/R^3 \leqq 2 \times 10^{-2}$ [cm$^{-1}$] mit
$\lambda \neq$ Laserwellenlänge.

16. Verwendung einer Laseranordnung gemäß einem der Ansprüche 1 oder 2 im Leistungsbereich zwischen 0,5 mW und 5 mW, insbesondere zwischen 0,5 mW und 2 mW.

17. Verwendung einer Laseranordnung gemäß einem der Ansprüche 1 bis 4 als Ein-Frequenz-Signalgeber.

18. Verwendung einer Laseranordnung gemäß einem der Ansprüche 1 bis 4 als amplituden- und/oder frequenzmodulierte Lichtquelle.

## Revendications

1. Dispositif laser à ions d'un gaz rare, comportant un corps (1) à canal de décharge (7) oblong, empli de gaz et notamment cylindrique, deux électrodes (2, 3) à l'aide desquelles on peut produire une décharge gazeuse dans le canal de décharge (7), deux miroirs (5, 6) qui forment un résonateur optique et qui délimitent entre eux le canal de décharge (7), ainsi qu'un circuit d'attaque, caractérisé par les dimensions suivantes dans la région de la zone de décharge:

—plus grand rayon du canal de décharge

$$R: 2 \times 10^{-2} < R \leqq 4 \times 10^{-2} \text{ [cm]}$$

—densité de courant j avec dans le tube de décharge:

$$jR \leqq 50 \text{ [A/cm]}$$

—intensité du champ longitudinal $E_z$:

$$0,5/R \leqq E_z \leqq 0,8/R \text{ [V/cm]}.$$

2. Dispositif laser à ions d'un gaz rare, comportant un corps (1) à canal de décharge (7) oblong, empli de gaz et notamment cylindrique, deux électrodes (2, 3) à l'aide desquelles on peut produire une décharge gazeuse dans le canal de décharge (7), deux miroirs (5, 6) qui forment un résonateur optique et qui délimitent entre eux le canal de décharge (7), ainsi qu'un circuit d'attaque, caractérisé par les dimensions suivantes dans la région de la zone de décharge:

—plus grand rayon du canal de décharge R:

$$3 \times 10^{-3} \leqq R \leqq 2 \times 10^{-2} \text{ [cm]}$$

—densité de courant j dans le tube de décharge:

$$j \leqq 2500 \text{ [A/cm}^2\text{]}$$

—intensité du champ longitudinal $E_z$:

$$0,5/R \leqq E_z \leqq 0,8/R \text{ [V/cm]}.$$

3. Dispositif laser suivant la revendication 1 ou 2, caractérisé en ce que,

—le corps est constitué sous la forme d'une plaque,

—le canal de décharge (7) est fermé des deux côtés par des miroirs (5, 6), qui s'appliquent sur des surfaces frontales opposées de la plaque (1),

—la plaque (1) est incluse entre deux parties métalliques s'appliquant à ses surfaces de base, dont l'une (2) a également la forme d'une plaque et sert d'anode de décharge, et dont l'autre (3) forme une cavité dans laquelle se trouve la cathode de décharge (4),

—le canal de décharge (7) est relié, par un premier évidement (10), ménagé dans la plaque, à l'anode (2) et, par deux autres évidements (11, 12), ménagés dans la plaque, à la cavité du godet cathodique, l'un des évidements (12) ménagés dans la plaque du côté de la cathode se trouvant dans la région du premier évidement (10) ménagé dans la plaque.

4. Dispositif laser suivant la revendication 1 ou 2, caractérisé en ce que,

—le corps est constitué sous la forme d'une plaque (1) en deux parties, et elle est fendue au niveau d'un plan qui est parallèle à leurs surfaces de base,

—le canal de décharge (7) est ménagé dans la première partie (13) de la plaque et cela dans sa surface en contact avec l'autre partie (14) de la plaque,

—le canal de décharge (7) s'élargit à ses deux extrémités, et chacun et des élargissements reçoit un support de miroir (15, 16),

—chaque support de miroir (15, 16) est constitué d'un petit tube métallique, chacun d'entre eux maintenant l'un des miroirs (5, 6) et servant d'anode de décharge,

—sur l'une des deux surfaces de base de la plaque (1), s'applique une partie métallique (3) qui forme une cavité recevant la cathode de décharge (4),

—la première partie (13) de plaque comporte un évidement (18, 19) qui met en communication les extrémités élargies du canal de décharge avec le milieu du canal de décharge (7),

—la seconde partie (14) de la plaque comporte un évidement (11) qui met en communication le milieu du canal de décharge (7) avec la cavité.

5. Dispositif laser suivant l'une des revendications 1 à 4, caractérisé en ce que le gaz de remplissage est l'argon.

6. Dispositif laser suivant l'une des revendications 1 à 5, caractérisé en ce que:

$1,3/R \leq p \leq 6,7/R$ [Pa/cm], notamment

$2,7/R \leq p \leq 4/R$ [Pa/cm]

p étant la pression de remplissage du gaz.

7. Dispositif laser suivant l'une des revendications 1 à 5, caractérisé en ce que le corps (1) est tubulaire et est en oxyde de béryllium et en ce que:

$L \leq 6300R$ et

$R_a/R \leq 45$

L étant la longueur du corps,

$2R_a$ étant la dimension transversale extérieure la plus petite du corps.

8. Dispositif laser suivant l'une des revendications 1 à 7, caractérisé en ce qu'il est prévu un dispositif à miroir à foyer commun et en ce que la distance entre les miroirs (5, 6) est supérieure de 1,8 fois à 3,2 fois à la longueur de la zone de décharge du gaz dans le canal de décharge (7).

9. Dispositif laser suivant l'une des revendications 1 à 8, caractérisé en ce que:

$$\frac{mR_1^3}{L_1} > 10^3 \, iR$$

$2R_1$, $L_1$, m étant respectivement la plus grande dimension transversale, la longueur et le nombre des conduits d'égalisation de la pression (12, 18, 19);

i étant le courant de décharge.

10. Dispositif laser suivant la revendication 3, caractérisé en ce que les miroirs sont des lentilles (5, 6) ayant un côté extérieur incurvé muni d'une couche réfléchissante et un côté intérieur plan non réfléchissant.

11. Dispositif laser suivant la revendication 3 ou 4, caractérisé en ce que l'évidement ménagé dans la première partie (13) de la plaque est formé d'un canal transversal (18) oblong et d'une gorge annulaire (19), le canal transversal (18) coupant le canal de décharge (7) en son milieu, et la gorge annulaire (19) mettant les extrémités du canal de décharge en communication avec les extrémités du canal transversal.

12. Dispositif laser suivant la revendication 3 ou 4, caractérisé en ce que le gaz de remplissage est de l'argon et en ce que le canal de décharge (7) a un diamètre de 0,1 mm environ et une longueur approximative de 3 cm, en ce que la zone de décharge a une longueur de 1 cm environ, en ce que la plaque (1) a une épaisseur de 0,5 cm environ, en ce que le courant de décharge et la tension de décharge ont respectivement des valeurs de 200 mA et 130 V environ, et en ce que la pression de remplissage est de 670 Pa environ.

# EP 0 177 729 B1

13. Dispositif laser suivant l'une des revendications 1 à 12, caractérisé en ce que:

$$0,6/R \leq E_z \leq 0,7/R \text{ [V/cm]}$$

$E_z$ étant l'intensité du champ longitudinal dans la décharge gazeuse.

14. Laser suivant l'une des revendications 1 à 13, caractérisé en ce que la lumière laser enfermée entre les miroirs ne se présente qu'en mode-résonateur et en ce que:

$R^2/\lambda b \geq 0,5$ pour $2R \geq 4 \times 10^{-2}$ cm et

$R^2/\lambda b \geq 0,15$ pour $2R < 4 \times 10^{-2}$ cm, et

b étant la distance entre les miroirs et $\lambda$ la longueur d'onde du laser.

15. Laser suivant l'une des revendications 1 à 13, caractérisé en ce que la lumière laser enfermée entre les miroirs se présente qu'en mode-guide d'onde et en ce que:

$$\lambda^2/R^3 \leq 2 \times 10^{-2} \text{ [cm}^{-1}\text{]}$$

$\lambda$ étant la longueur d'onde du laser.

16. Utilisation d'un dispositif laser suivant l'une des revendications 1 ou 2, dans la plage des puissances comprises entre 0,5 mW et 5 mW, notamment entre 0,5 mW et 2 mW.

17. Utilisation d'un dispositif laser suivant l'une des revendications 1 à 4 comme générateur de signaux à une seule fréquence.

18. Utilisation d'un dispositif laser suivant l'une des revendications 1 à 4 comme source de lumière modulée en amplitude et/ou en fréquence.

## Claims

1. Noble gas ion laser arrangement containing a body (1) comprising an elongated gas-filled and, in particular, cylindrical discharge channel (7), two electrodes (2, 3) by means of which a gas discharge can be generated in the discharge channel (7), two mirrors (5, 6) forming an optical resonator, which enclose the discharge channel (7) between them, and a drive circuit, characterized by the following dimensionings in the area of the discharge path:

—maximum discharge channel radius

$$R: 2 \times 10^{-2} < R \leq 4 \times 10^{-2} \text{ [cm]}$$

—current density j in the discharge tube:

$$jR \leq 50 \text{ [A/cm]}$$

—longitudinal field strength $E_z$:

$$0.5/R \leq E_z \leq 0.8/R \text{ [V/cm]}.$$

2. Noble gas ion laser arrangement containing a body (1) comprising an elongated gas-filled and, in particular, cylindrical discharge channel (7), two electrodes (2, 3) by means of which a gas discharge can be generated in the discharge channel (7), two mirrors (5, 6) forming a resonator, which enclose a discharge channel (7) between them, and a drive circuit, characterized by the following dimensionings in the area of the discharge path:

—maximum discharge channel radius R:

$$3 \times 10^{-3} \leq R \leq 2 \times 10^{-2} \text{ [cm]}$$

—current density j:

$$j \leq 2500 \text{ [A/cm}^2\text{]}$$

—longitudinal field strength $E_z$:

$$0.5/R \leq E_z \leq 0.8/R \text{ [V/cm]}.$$

3. Laser arrangement according to Claim 1 or 2, characterized in that

—the body is constructed as a plate,

—the discharge channel (7) is closed off at both ends by mirrors (5, 6) which rest against opposite front faces of the plate (1),

—the plate (1) is enclosed between two metal parts resting against its base areas, of which one part (2) also has a plate shape and is used as discharge anode and the other part (3) forms a cavity in which the discharge cathode (4) is located,

—the discharge channel (7) is connected via a first plate recess (10) to the anode (2) and via two further

10

plate recesses (11, 12) to the cavity of the cathode pot, one of the cathode-side plate recesses (12) being located in the area of the first plate recess (10).

4. Laser arrangement according to Claim 1 or 2, characterized in that
—the body is constructed as a two-part plate (1) which is cut through in a plane parallel to its base areas,
—the discharge channel (7) is produced in the first plate part (13), namely in its area which is in contact with the other plate part (14),
—the discharge channel (7) is widened at its two ends and each of these widenings accommodates a mirror carrier (15, 16),
—each mirror carrier (15, 16) consists of a small metal tube, in each case holds one of the mirrors (5, 6) and is used as discharge anode,
—a metal part (3), which forms a cavity accommodating the discharge cathode (4), rests against one of the two base areas of the plate (1),
—the first plate part (13) contains a recess (18, 19) which connects the widened discharge channel ends to the centre of the discharge channel (7),
—the second plate part (14) contains a recess (11) which connects the centre of the discharge channel (7) to the cavity.

5. Laser arrangement according to one of Claims 1 to 4 characterized in that the filling gas is argon.

6. Laser arrangement according to one of Claims 1 to 5, characterized in that the following holds true:
$1.3/R \leq p \leq 6.7/R$ [Pa/cm], in particular
$2.7/R \leq p \leq 4/R$ [Pa/cm], with
$p \neq$ filling pressure of the gas.

7. Laser arrangement according to one of Claims 1 to 5, characterized in that the body (1) is tubular and consists of beryllium oxide in that the following holds true:
$L \leq 6300R$ and
$R_a/R \leq 45$, with
$L \neq$ length of the body,
$2R_a \neq$ smallest transverse outside dimension of the body.

8. Laser arrangement according to one of Claims 1 to 7, characterized in that a confocal mirror arrangement is provided and in that the distance between the mirrors (5, 6) is 1.8 times to 3.2 times greater than the length of the gas discharge path in the discharge channel (7).

9. Laser arrangement according to one of Claims 1 to 8, characterized in that the following holds true:

$$\frac{mR_1^3}{L_1} > 10^3 \, iR, \text{ with}$$

$2R_1, L_1, m \neq$ maximum transverse dimension or length or number of pressure compensation lines (12, 18, 19) respectively;
$i \neq$ discharge current.

10. Laser arrangement according to Claim 3, characterized in that the mirrors are lenses (5, 6) with a metallized curve outside and a non-reflecting plane inside.

11. Laser arrangement according to Claim 3 or 4, characterized in that the recess in the first plate part (13) is formed of an elongated transverse channel (18) and an annular groove (19), the transverse channel (18) intersecting the discharge channel (7) at its centre and the annular groove (19) connecting the discharge channel ends with the ends of the transverse channel.

12. Laser arrangement according to Claim 3 or 4, characterized in that the filling gas is argon and in that the discharge channel (7) has a diameter of approximately 0.1 mm and a length of approximately 3 cm, in that the discharge path has a length of approximately 1 cm, in that the plate (1) has a thickness of approximately 0.5 cm, in that the discharge current and discharge voltage have values of about 200 mA and 130 V respectively, and in that the filling pressure is about 670 Pa.

13. Laser arrangement according to one of Claims 1 to 12, characterized in that the following holds true:

$$0.6/R \leq E_z \leq 0.7/R \text{ [V/cm], with}$$

$E_z \neq$ longitudinal field strength in the gas discharge.

14. Laser arrangement according to one of Claims 1 to 13, characterized in that the laser light enclosed between the mirrors is present in only one resonator mode and in that the following holds true:
$R^2/\lambda b \geq 0.5$ for $2R \geq 4 \times 10^{-2}$ cm and
$R^2/\lambda b \geq 0.15$ for $2R < 4 \times 10^{-2}$ cm, with
$b \neq$ mirror spacing, $\lambda \neq$ laser wavelength.

15. Laser arrangement according to one of Claims 1 to 13, characterized in that the laser light enclosed between the mirrors is present in a waveguide mode and in that the following holds true:

$$\lambda^2/R^3 \leq 2 \times 10^{-2} \text{ [cm}^{-1}\text{], with}$$

$\lambda \neq$ laser wavelength.

16. Use of a laser arrangement according to one of Claims 1 or 2 in the power range between 0.5 mW and 5 mW, particularly between 0.5 mW and 2 mW.

17. Use of a laser arrangement according to one of Claims 1 to 4 as a single-frequency signal generator.

18. Use of a laser arrangement according to one of Claims 1 to 4 as an amplitude- and/or frequency-modulated light source.

FIG 1

FIG 2

FIG 3

# FIG 4

# FIG 5

# FIG 6

# FIG 7

FIG 8

FIG 9